(19) Europäisches Patentamt
European Patent Office
Office européen des brevets

(11) **EP 3 259 761 B1**

(12) **FASCICULE DE BREVET EUROPEEN**

(45) Date de publication et mention
de la délivrance du brevet:
**19.09.2018 Bulletin 2018/38**

(21) Numéro de dépôt: **16707894.8**

(22) Date de dépôt: **10.02.2016**

(51) Int Cl.:
**G21K 1/00** *(2006.01)*  **G01P 15/00** *(2006.01)*
**G01V 7/00** *(2006.01)*

(86) Numéro de dépôt international:
**PCT/FR2016/050301**

(87) Numéro de publication internationale:
**WO 2016/132047 (25.08.2016 Gazette 2016/34)**

(54) **MESURE PAR INTERFÉROMÉTRIE ATOMIQUE AVEC PLUSIEURS ESPÈCES D'ATOMES**

MESSUNG DURCH ATOMINTERFEROMETRIE MIT EINER VIELZAHL VON ATOMARTEN

MEASUREMENT BY ATOMIC INTERFEROMETRY WITH MULTIPLE SPECIES OF ATOMS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.02.2015 FR 1551267**

(43) Date de publication de la demande:
**27.12.2017 Bulletin 2017/52**

(73) Titulaire: **ONERA (Office National d'Etudes et de
Recherches
Aérospatiales)
91120 Palaiseau (FR)**

(72) Inventeurs:
• **ZAHZAM, Nassim**
**91761 Palaiseau (FR)**
• **BIDEL, Yannick**
**91761 Palaiseau (FR)**
• **BRESSON, Alexandre**
**91761 Palaiseau (FR)**
• **BONNIN, Alexis**
**91761 Palaiseau (FR)**

(74) Mandataire: **Cabinet Plasseraud
66, rue de la Chaussée d'Antin
75440 Paris Cedex 09 (FR)**

(56) Documents cités:
**US-A1- 2013 218 504**

• **A. BONNIN ET AL: "Simultaneous dual-species
matter-wave accelerometer", PHYSICAL REVIEW
A (ATOMIC, MOLECULAR, AND OPTICAL
PHYSICS), vol. 88, no. 4, 11 octobre 2013
(2013-10-11), pages 43615-1, XP055230224, USA
ISSN: 1050-2947, DOI:
10.1103/PhysRevA.88.043615 cité dans la
demande**
• **KUHN C C N ET AL: "A Bose-condensed,
simultaneous dual species Mach-Zehnder atom
interferometer", ARXIV.ORG, CORNELL
UNIVERSITY LIBRARY, 201 OLIN LIBRARY
CORNELL UNIVERSITY ITHACA, NY 14853, 23
janvier 2014 (2014-01-23), XP080003352,**
• **TINO G M ET AL: "Precision Gravity Tests with
Atom Interferometry in Space", NUCLEAR
PHYSICS B. PROCEEDINGS SUPPLEMENT,
NORTH-HOLLAND, AMSTERDAM, NL, vol. 243, 4
novembre 2013 (2013-11-04), pages 203-217,
XP028764955, ISSN: 0920-5632, DOI:
10.1016/J.NUCLPHYSBPS.2013.09.023**

**Description**

La présente invention concerne un procédé de mesure par interférométrie atomique, ainsi qu'un appareil pour mettre en oeuvre ce procédé.

Il est connu de mesurer une grandeur inertielle par interférométrie atomique. La grandeur inertielle peut être une coordonnée de champ gravitationnel ou une coordonnée d'une accélération qui est subie par des atomes utilisés pour la mesure.

Pour réaliser une telle mesure, un ensemble d'atomes est refroidi jusqu'à une température de quelques microkelvins, puis subit une séquence d'interactions avec des photons pour former une interférence atomique. Une mesure est alors effectuée, d'un déphasage qui est apparu lors de la formation de l'interférence atomique dans la fonction d'onde atomique («matter-wave» en anglais) résultante pour l'ensemble d'atomes. De façon connue, lorsque l'ensemble d'atomes est soumis à une accélération pendant la formation de l'interférence, le déphasage est $\Delta\Phi = \mathbf{k} \cdot \mathbf{a} \times T^2 + \Delta\Phi_{op}$, où $\mathbf{k}$ est le vecteur d'onde qui correspond à une impulsion («momentum» en anglais) reçue ou cédée par un des atomes lors de chaque interaction entre les atomes et les photons, $\mathbf{a}$ est le vecteur de l'accélération subie par les atomes, • désigne l'opération de produit scalaire entre les vecteurs $\mathbf{k}$ et $\mathbf{a}$, T est un temps de base qui sépare des impulsions («pulse» en anglais) laser successives dans la séquence d'interactions entre les atomes et les photons qui forme l'interférence, et $\Delta\Phi_{op}$ est un déphasage constant qui dépend de la façon de produire les conditions d'interférence.

En fait, le résultat de la mesure, noté P, n'est pas directement le déphasage $\Delta\Phi$, mais une valeur qui dépend de ce déphasage par l'intermédiaire d'une fonction périodique, selon la formule $P = P_0 \cdot [1 - C \times \cos(\Delta\Phi)]$, où $P_0$ et C sont deux nombres non nuls. A cause de la périodicité de la fonction $P(\Delta\Phi)$, plusieurs valeurs différentes pour la composante d'accélération a qui est parallèle au vecteur d'onde $\mathbf{k}$, sont généralement compatibles avec chaque résultat de mesure P. Il en résulte une indétermination quant à laquelle de ces valeurs correspond à l'accélération réelle. Plus précisément, les valeurs de la composante d'accélération a qui correspondent au même résultat de mesure P sont :

$$a_n = [\text{Arc} \cos(1/C - P/(C \times P_0)) - \Delta\Phi_{op} + n \times 2\Pi] / (k \times T^2)$$

et

$$a_n^* = [- \text{Arc} \cos(1/C - P/(C \times P_0)) - \Delta\Phi_{op} + n \times 2\Pi] / (k \times T^2)$$

où k est la norme du vecteur d'onde $\mathbf{k}$, n est un nombre entier naturel quelconque, et Arc cos désigne la réciproque de la fonction cosinus. Dans la pratique, la valeur de la composante d'accélération a est attendue à l'intérieur d'un intervalle, appelé intervalle d'exploration, qui est connu préalablement, mais la longueur de cet intervalle est supérieure à $\Pi/(k \times T^2)$. L'indétermination parmi plusieurs valeurs $a_n$ et/ou $a_n^*$ est donc réelle.

Pour résoudre - ou supprimer - une telle indétermination, il est connu de joindre à l'appareil de mesure par interférométrie atomique, un capteur inertiel dont le principe de mesure est différent.. Ce capteur fournit un résultat de mesure pour la composante d'accélération a qui est peu précis, mais qui suffit pour supprimer l'indétermination parmi les valeurs multiples qui sont fournies par l'appareil de mesure par interférométrie atomique. Or ces valeurs obtenues par interférométrie atomique ont chacune une précision élevée, si bien que la combinaison des deux appareils produit finalement une valeur de résultat qui est unique et précise pour la composante d'accélération.

Mais l'adjonction du capteur inertiel qui ne procède pas par interférométrie atomique présente de nombreux inconvénients. En effet, ce capteur inertiel est encombrant, peut être lourd, est susceptible de générer des vibrations, et augmente le prix de revient de l'ensemble du dispositif de mesure. De plus, des mesures qui sont réalisées respectivement avec l'appareil à interférométrie atomique et avec le capteur inertiel ne peuvent pas concerner exactement un même endroit dans l'espace lorsqu'elles sont réalisées simultanément, puisque l'appareil et le capteur sont matériellement distincts, et donc séparés même s'ils sont proches l'un de l'autre.

Par ailleurs, il est connu notamment de l'article intitulé «Simultaneous Dual-Species Matter-Wave Accelerometer», de A. Bonnin, N. Zahzam, Y. Bidel et A. Bresson, Phys. Rev. A 88, 043615 (2013), de réaliser des interférences atomiques avec deux ensembles d'atomes d'espèces différentes, à un même endroit et à un même instant. Chaque ensemble d'atomes fournit alors un résultat de mesure indépendamment de l'autre ensemble d'atomes. La précision globale qui en résulte pour chaque valeur d'accélération ainsi déterminée par double-mesure est améliorée, mais l'indétermination entre plusieurs valeurs possibles qui a été exposée plus haut demeure.

Enfin, l'article intitulé «Simultaneous measurement of gravity accélération and gravity gradient with an atom interferometer», de F. Sorrentino et al., Appl. Phys. Lett. 101, 114106 (2012), décrit un gradiomètre à interférences atomiques. Avec le type d'appareil de ce document, deux mesures sont effectuées simultanément en utilisant deux ensembles d'atomes d'une même espèce, mais qui sont situés à deux endroits de mesures distants l'un de l'autre.

A partir de cette situation, un but de la présente invention consiste à supprimer une telle indétermination entre plusieurs valeurs possibles pour un paramètre qui est déterminé à partir de mesures réalisées par interférométrie atomique, lorsque ces valeurs multiples sont toutes compatibles avec les résultats des mesures.

Un but complémentaire de l'invention est de supprimer l'indétermination sans avoir recours à un capteur inertiel annexe, en plus de l'appareil de mesure par interférométrie atomique.

Pour cela, un premier aspect de l'invention propose un procédé de mesure par interférométrie atomique, dans lequel chaque session de mesures est exécutée avec au moins deux ensembles d'atomes qui sont soumis chacun à des conditions de formation d'une interférence atomique. Les atomes de chaque ensemble d'atomes sont d'une espèce qui est dédiée à cet ensemble d'atomes et qui est différente de l'espèce des atomes de chaque autre ensemble d'atomes.

Pour chaque session de mesures, les conditions de formation de l'interférence atomique sont produites pour chaque ensemble d'atomes dans tout un volume qui est associé à cet ensemble d'atomes et qui contient au moins un point commun avec le volume associé à chaque autre ensemble d'atomes. Autrement dit, les interférences atomiques sont produites à un même endroit pour tous les ensembles d'atomes, de sorte que les résultats des mesures qui sont obtenus pour les différents ensembles d'atomes sont tous relatifs à ce même endroit.

En outre, les conditions de formation de l'interférence atomique sont produites pour chaque ensemble d'atomes entre un instant de début et un instant de fin respectivement avant et après un instant intermédiaire qui est commun pour tous les ensembles d'atomes. Autrement dit, les interférences atomiques sont produites simultanément pour tous les ensembles d'atomes, de sorte que les résultats des mesures qui sont obtenus pour les différents ensembles d'atomes sont tous relatifs à l'instant intermédiaire.

Un résultat de mesure est alors obtenu à chaque session de mesures indépendamment pour chaque ensemble d'atomes, chaque résultat de mesure variant selon une première fonction d'un déphasage qui est apparu pour l'ensemble d'atomes lors de la formation de l'interférence atomique, et ce déphasage étant lui-même une seconde fonction d'un paramètre externe dont une valeur est recherchée. Dans ces conditions, la première fonction est alternativement croissante et décroissante pour au moins un premier des ensembles d'atomes de sorte qu'un même résultat de mesure qui est obtenu pour ce premier ensemble d'atomes corresponde à plusieurs valeurs possibles du paramètre externe à l'intérieur d'un intervalle d'exploration non nul. Simultanément, la seconde fonction possède, pour au moins un autre des ensembles d'atomes différent du premier ensemble d'atomes, une dérivée par rapport à la valeur du paramètre externe, qui dépend d'au moins un facteur sélectionné parmi un temps de base pour une séquence d'interactions entre les atomes et des photons, et un nombre de photons impliqués dans une interaction multi-photonique, la séquence d'interactions ou l'interaction multi-photonique étant mise en oeuvre pour former l'interférence atomique de l'autre ensemble d'atomes.

Selon l'invention, une valeur du facteur est sélectionnée pour réaliser une session de mesures, de sorte que le résultat de mesure qui est obtenu pour l'autre ensemble d'atomes corresponde à une valeur unique du paramètre externe à l'intérieur de l'intervalle d'exploration, si bien qu'une indétermination entre plusieurs valeurs du paramètre externe qui existe à partir du résultat de mesure obtenu pour le premier ensemble d'atomes, est supprimée par corrélation avec le résultat de mesure obtenu pour l'autre ensemble d'atomes.

Ainsi, l'invention supprime l'indétermination des appareils de mesure antérieurs, sans nécessiter de capteur inertiel autre que le système d'interférométrie atomique multiple.

La première fonction peut avoir pour expression $P = P_0 \cdot [1 - C \times \cos(\Delta\Phi(a))]$ au moins pour le premier ensemble d'atomes, où P désigne le résultat de mesure, a désigne le paramètre externe dont la valeur est recherchée, $\Delta\Phi$ (a) est le déphasage et $P_0$ et C sont deux nombres non nuls.

La seconde fonction peut être du type fonction affine, au moins pour le ainsi nommé autre ensemble d'atomes. Dans ce cas, un coefficient directeur de cette fonction affine peut être égal à $k \times T^2$, où T est le temps de base pour la séquence d'interactions correspondante entre les atomes et les photons, et k est le module d'une impulsion reçue ou cédée par un des atomes lors de chaque interaction entre les atomes et les photons, divisé par $h/2\Pi$ où h est la constante de Planck.

En outre, une dérivée du résultat de mesure qui est obtenu lors d'une session de mesures pour le premier ensemble d'atomes, par rapport à la valeur du paramètre externe, peut être supérieure à la dérivée du résultat de mesure qui est obtenu lors de la même session de mesures pour l'autre ensemble d'atomes, aussi par rapport à la valeur du paramètre externe, en valeurs absolues. Ainsi, le premier ensemble d'atomes procure une bonne précision dans la valeur qui est déterminée de façon univoque grâce à l'autre ensemble d'atomes, pour le paramètre externe à l'issue de la session de mesures.

Dans divers modes de mise en oeuvre de l'invention, deux des espèces d'atomes, qui sont dédiées à des ensembles différents d'atomes utilisés dans une même session de mesures, peuvent être les isotopes 85 et 87 du rubidium. Alternativement, ce peut être des isotopes respectifs du rubidium et du césium, ou encore du rubidium et du potassium.

De façon générale, le paramètre externe peut être une coordonnée d'un champ gravitationnel, ou une coordonnée d'une accélération subie par les atomes.

Un second aspect de l'invention propose un appareil de mesure par interférométrie atomique qui comprend :

- une source d'atomes, adaptée pour produire au moins deux ensembles d'atomes, avec les atomes de chaque ensemble d'atomes qui sont d'une espèce dédiée à cet ensemble d'atomes et différente de l'espèce des atomes de chaque autre ensemble d'atomes ;

- des moyens adaptés pour produire des conditions d'interférence atomique pour chaque ensemble d'atomes, de sorte que ces conditions soient produites pour chaque ensemble d'atomes dans tout un volume qui est associé à l'ensemble d'atomes et qui contient au moins un point commun avec le volume associé à chaque autre ensemble d'atomes, et soient produites entre un instant de début et un instant de fin respectivement avant et après un instant intermédiaire qui est commun pour tous les ensembles d'atomes, de façon à constituer une session de mesures ;

- un dispositif de détection, qui est agencé pour fournir des résultats de mesure respectivement et indépendamment pour tous les ensembles d'atomes de chaque session de mesures ; et

- une unité d'analyse, qui est adaptée pour calculer au moins une valeur d'un paramètre externe à partir de chaque résultat de mesure.

Selon l'invention, l'appareil est adapté pour mettre en oeuvre un procédé qui est conforme au premier aspect de l'invention tel que décrit précédemment, y compris ses variantes et ses perfectionnements.

Avantageusement, pour chaque session de mesures, les conditions d'interférences atomiques peuvent être produites pour tous les ensembles d'atomes en utilisant un ensemble laser unique, qui est commun à ces ensembles d'atomes.

Un tel appareil peut former notamment un accéléromètre, un gravimètre ou un gyromètre.

D'autres particularités et avantages de la présente invention apparaîtront dans la description ci-après d'exemples de réalisation non limitatifs, en référence aux dessins annexés, dans lesquels :

- la figure 1 est un schéma de principe d'un appareil de mesure par interférométrie atomique conforme à la présente invention ;

- la figure 2 illustre des étapes d'une session de mesures réalisée en utilisant un appareil conforme à la figure 1 ;

- la figure 3 illustre une séquence particulière d'interactions pour créer une interférence atomique, qui peut être utilisée pour mettre en oeuvre l'invention ; et

- la figure 4 illustre une levée d'indétermination obtenue en appliquant l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

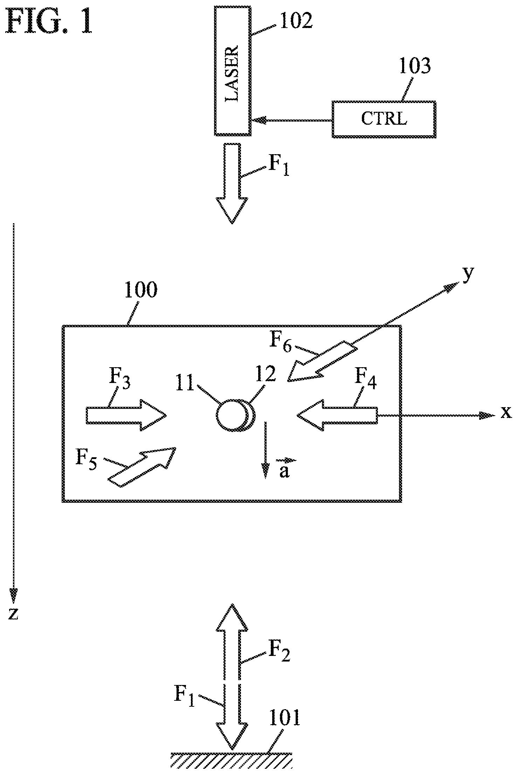

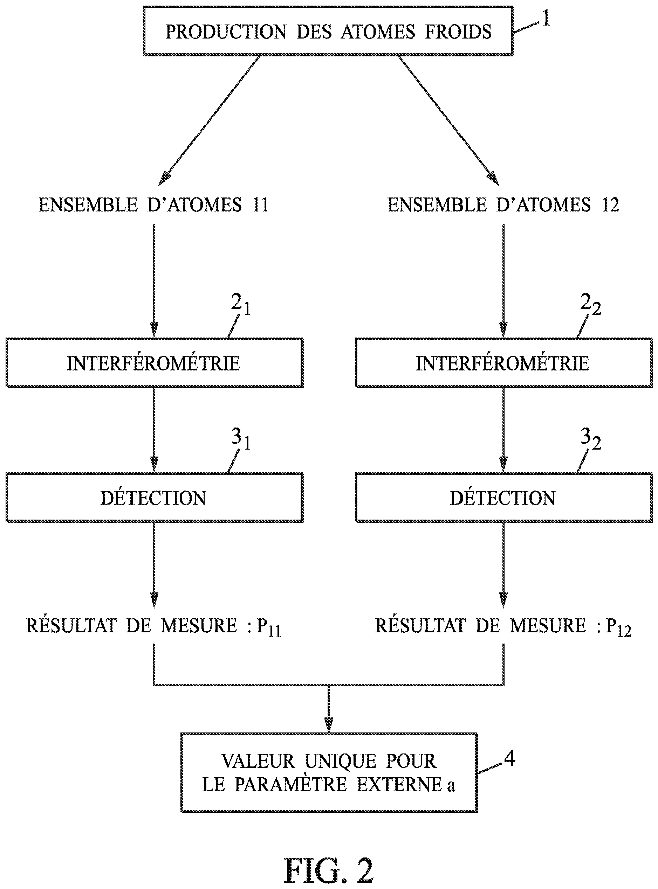

Comme illustré par les figures 1 et 2, un appareil conforme à l'invention comprend une source d'atomes 100 qui est utilisée pour produire deux ensembles d'atomes froids 11 et 12, correspondant à l'étape 1 de la figure 2. De façon préférée, les atomes de l'ensemble 11 peuvent être des atomes $^{85}$Rb, et ceux de l'ensemble 12 peuvent être des atomes $^{87}$Rb. La source 100 a pour fonction de piéger les atomes de chaque ensemble 11, 12 et de les refroidir jusqu'à une température déterminée. Elle peut avoir l'une des structures connues de l'Homme du métier, telle qu'un piège magnéto-optique. Un tel piège comprend une paire de bobines (non représentées) en configuration anti-Helmholtz, qui sont alimentées en courant électrique pendant une première phase de fonctionnement du piège pour créer un gradient de champ magnétique à l'endroit auquel chaque ensemble d'atomes est maintenu. Trois paires de faisceaux laser se croisent à cet endroit, en se propageant dans des sens opposés pour deux faisceaux d'une même paire. Ainsi, les faisceaux $F_1$ et $F_2$ se propagent en sens opposés selon l'axe z, les faisceaux $F_3$ et $F_4$ selon l'axe x et les faisceaux $F_5$ et $F_6$ selon l'axe y. Différentes méthodes de formation des faisceaux $F_1$-$F_6$, notamment en utilisant des miroirs de renvoi tel que le miroir 101 pour réduire le nombre de sources laser qui sont nécessaires, sont connues si bien qu'il n'est pas nécessaire de les répéter. Dans une seconde phase de fonctionnement du piège magnéto-optique, le gradient de champ magnétique est supprimé et les fréquences de rayonnement des faisceaux laser sont désaccordées pour obtenir les ensembles d'atomes froids 11 et 12, appelés mélasses.

En fait, la source 100 peut comprendre deux injecteurs d'atomes, respectivement de $^{85}$Rb et de $^{87}$Rb, et le piège magnéto-optique est contrôlé pour produire deux structures de piégeage enchevêtrées, qui sont respectivement

destinées aux atomes $^{85}$Rb et aux atomes $^{87}$Rb. La source 100 est adaptée pour que les deux ensembles 11 et 12 soient disponibles en même temps et au même endroit, pour subir chacun une séquence d'interactions avec des photons indépendamment de l'autre ensemble d'atomes.

Les séquences d'interactions avec les photons sont alors produites simultanément pour les deux ensembles d'atomes 11 et 12, correspondant aux étapes $2_1$ et $2_2$, pour produire une interférence atomique pour chacun de ces ensembles indépendamment de l'autre ensemble. Chaque séquence peut comprendre une série d'impulsions laser pour provoquer des transitions stimulées entre deux états des atomes de l'ensemble 11 ou 12 auquel la séquence est dédiée. Plusieurs séquences d'impulsions peuvent être utilisées alternativement, dont celle qui est dite usuellement de Mach-Zehnder et décrite dans l'article intitulé «Atomic interferometry using stimulated Raman transitions», de M. Kasevitch et al., Phys. Rev. Lett. 67, pp. 181-184 (1991) et qui est rappelée maintenant :

- une première impulsion, dite impulsion $\pi/2$ et ayant une fonction de séparatrice pour la fonction d'onde de l'ensemble d'atomes initial, afin de produire deux paquets d'onde atomique ;

- une seconde impulsion, dite $\pi$ et ayant une fonction de miroir atomique pour chaque paquet d'onde atomique ; puis

- une troisième impulsion, de nouveau $\pi/2$ et ayant une fonction de recombinaison des paquets d'onde atomique.

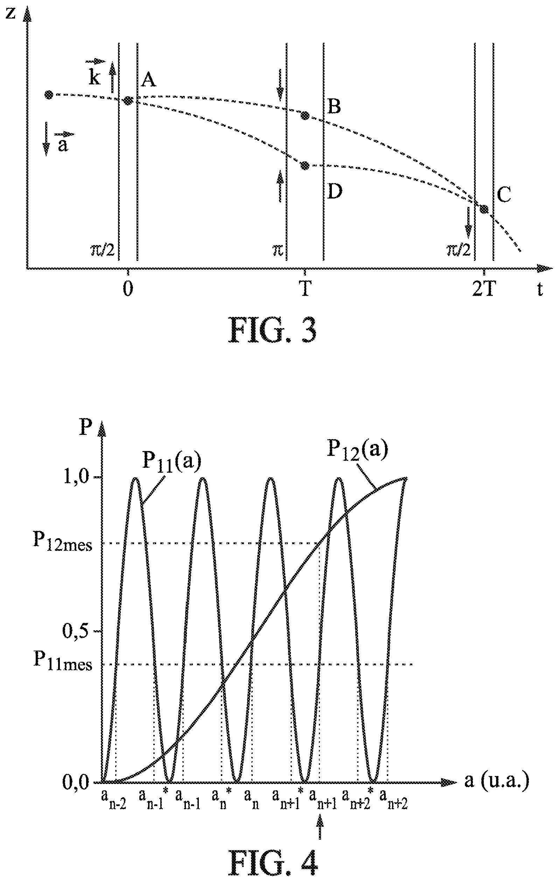

Cette séquence d'interactions est illustrée par la figure 3, dans laquelle t désigne le temps, et A, B, C et D désignent les interactions que subissent à chaque fois une partie de l'ensemble d'atomes concerné. k désigne alternativement les modules des vecteurs d'onde $k_{11}$ et $k_{12}$ qui seront définis plus loin respectivement pour les ensembles d'atomes 11 ou 12, et de même pour T qui désigne alternativement les temps de base $T_{11}$ et $T_{12}$.

En particulier, la configuration d'appareil qui est décrite dans l'article «A cold atom pyramidal gravimeter with a single laser beam», de Q. Bodart et al., Appl. Phys. Lett. 96, 134101 (2010), peut être reprise. Le piège magnéto-optique et les moyens de production des conditions d'interférence atomique sont réalisés en utilisant un ensemble unique de source laser, comprenant la source laser 102 et l'unité de commande 103. Une telle configuration d'appareil est simple, économique et très compacte. En outre, le même ensemble de source laser peut être utilisé pour les deux ensembles d'atomes 11 et 12, comme décrit dans l'article intitulé «Simultaneous Dual-Species Matter-Wave Accelerometer», de A. Bonnin, N. Zahzam, Y. Bidel et A. Bresson, Phys. Rev. A 88, 043615 (2013), si bien qu'il possède les quatre fonctions suivantes :

- le piégeage et le refroidissement des atomes de l'ensemble 11 ;

- le piégeage et le refroidissement des atomes de l'ensemble 12 ;

- la production des impulsions pour créer les interférences d'onde atomique pour l'ensemble d'atomes 11 ; et

- la production des impulsions pour créer les interférences d'onde atomique pour l'ensemble d'atomes 12.

Chaque mesure interférométrique procède ensuite par détection de la proportion des atomes de l'ensemble correspondant qui se trouvent dans un état déterminé, par exemple l'un de deux états hyperfins fondamentaux. Plusieurs techniques différentes sont connues de l'Homme du métier pour réaliser une telle détection. Par exemple, ce peut être une mesure d'absorption lumineuse, avec des impulsions d'un rayonnement dont la longueur d'onde est sélectionnée pour provoquer une absorption à partir d'un seul des états atomiques hyperfins. De telles détections sont réalisées indépendamment pour les deux ensembles d'atomes 11 et 12, conformément aux étapes $3_1$ et $3_2$ de la figure 2. Des dispositifs de détection qui sont appropriés sont aussi supposés connus, et n'ont pas été représentés sur la figure 1 pour raison de clarté.

Un premier résultat de mesure, noté $P_{11}$, est ainsi obtenu pour l'ensemble d'atomes 11, et un second résultat de mesure, noté $P_{12}$, est aussi obtenu pour l'ensemble d'atomes 12. L'ensemble des étapes formé par la production des deux ensembles d'atomes 11 et 12 (étape 1), la production des séquences simultanées d'interactions avec des photons, respectivement pour les deux ensembles d'atomes (étapes $2_1$ et $2_2$), et les deux détections des proportions d'atomes qui se trouvent finalement dans un état déterminé pour obtenir les résultats de mesures $P_{11}$ et $P_{12}$ (étapes $3_1$ et $3_2$), constituent une session de mesures. Une telle session est caractérisée par la simultanéité des séquences d'interactions qui produisent les interférences atomiques, et la co-localisation des ensembles d'atomes pendant ces séquences, alors que les atomes des deux ensembles sont d'espèces différentes.

Dans ces conditions, le résultat de mesure $P_{11}$ est relié à la composante a selon l'axe z de l'accélération **a** qui est subie par les atomes de l'ensemble 11, par les deux relations suivantes :

$$P_{11} = P_0 \cdot [1 - C \times \cos(\Delta\Phi_{11}(a))]$$

$$\text{et } \Delta\Phi_{11}(a) = k_{11} \times T_{11}^2 \times a + \Delta\Phi_{op}$$

où $P_0$ et C sont deux nombres non nuls connus,

$\Delta\Phi_{11}(a)$ est le déphasage subi par les atomes de l'ensemble 11 pendant la formation de l'interférence atomique qui leur est destinée,

$k_{11}$ est le module de vecteur d'onde qui correspond à une impulsion («momentum» en anglais) reçue ou cédée par un des atomes de l'ensemble 11 lors de chaque interaction entre ces atomes et les photons,

$T_{11}$ est le temps de base qui sépare des impulsions («pulse» en anglais) laser successives dans la séquence d'interactions entre les atomes de l'ensemble 11 et les photons, et

$\Delta\Phi_{op}$ est un déphasage constant qui dépend de la façon de produire les conditions d'interférence pour l'ensemble d'atomes 11.

De la même façon, pour les atomes de l'ensemble 12, le résultat de mesure $P_{12}$ est relié à la même valeur de la composante a selon l'axe z de l'accélération **a** par les deux autres relations suivantes :

$$P_{12} = P_0' \cdot [1 - C' \times \cos(\Delta\Phi_{12}(a))]$$

$$\text{et } \Delta\Phi_{12}(a) = k_{12} \times T_{12}^2 \times a + \Delta\Phi_{op}'$$

où $P_0'$ et C' sont deux nombres non nuls connus, pouvant être différents de $P_0$ et C ou non

$\Delta\Phi_{12}(a)$ est le déphasage subi par les atomes de l'ensemble 12 pendant la formation de l'interférence atomique qui leur est destinée,

$k_{12}$ est le module de vecteur d'onde qui correspond à une impulsion («momentum» en anglais) reçue ou cédée par un des atomes de l'ensemble 12 lors de chaque interaction entre ces atomes et les photons,

$T_{12}$ est le temps de base qui sépare des impulsions («pulse» en anglais) laser successives dans la séquence d'interactions entre les atomes de l'ensemble 12 et les photons, et

$\Delta\Phi_{op}'$ est un déphasage constant qui dépend de la façon de produire les conditions d'interférence pour l'ensemble d'atomes 12, pouvant être différent de $\Delta\Phi_{op}$.

En liaison avec le vocable qui a été utilisé dans la partie générale de la présente description :

l'ensemble d'atomes 11 a été appelé premier ensemble d'atomes,

$P_{11}$ en tant que fonction de $\Delta\Phi_{11}$, a été appelé première fonction, effective pour le premier ensemble d'atomes,

$\Delta\Phi_{11}$ en tant que fonction de a, a été appelé seconde fonction, effective pour le premier ensemble d'atomes,

$k_{11} \times T_{11}^2$ est le coefficient directeur de la fonction $\Delta\Phi_{11}(a)$ qui est du type fonction affine

l'ensemble d'atomes 12 a été appelé autre ensemble d'atomes,

$P_{12}$ en tant que fonction de $\Delta\Phi_{12}$, a été aussi appelé première fonction, mais effective pour l'autre ensemble d'atomes,

$\Delta\Phi_{12}$ en tant que fonction de a, a été aussi appelé seconde fonction, mais effective pour l'autre ensemble d'atomes,

$k_{12} \times T_{12}{}^2$ est le coefficient directeur de la fonction $\Delta\Phi_{12}(a)$ qui est aussi du type fonction affine, et

a est le paramètre externe dont la valeur est recherchée

Le paramètre externe a qui est mesuré peut être une composante d'une accélération, par exemple due à un mouvement en translation ou en rotation d'un engin porteur de l'appareil de mesure par interférométrie atomique, ou peut être une composante d'un champ gravitationnel dans lequel se trouve l'appareil.

Selon l'invention, les conditions de formation de l'interférence atomique pour l'ensemble d'atomes 12 sont sélectionnées pour que la dérivée du déphasage $\Delta\Phi_{12}$ par rapport au paramètre externe a supprime l'indétermination qui est causée par la périodicité du résultat de mesure $P_{11}$ considéré comme une fonction du même paramètre externe a. Pratiquement, à partir des formules qui ont été citées ci-dessus, ces conditions de formation sont sélectionnées de sorte que $k_{12} \times T_{12}{}^2$ ait une valeur qui est suffisamment différente de celle de $k_{11} \times T_{11}{}^2$. Ceci peut être obtenu en variant la valeur de $T_{12}$ par rapport à celle de $T_{11}$, ou bien en variant la valeur de $k_{12}$ par rapport à celle de $k_{11}$. Eventuellement, ces deux méthodes peuvent être combinées. Autrement dit, les trois alternatives suivantes sont possibles pour mettre en oeuvre l'invention :

$$T_{12} \neq T_{11} \text{ et } k_{12} = k_{11}$$

$$T_{12} = T_{11} \text{ et } k_{12} \neq k_{11}$$

$$T_{12} \neq T_{11} \text{ et } k_{12} \neq k_{11} \text{ de sorte que } k_{12} \times T_{12}{}^2 \neq k_{11} \times T_{11}{}^2$$

La figure 4 illustre un exemple de mise en oeuvre de l'invention, dans lequel les valeurs des temps de base $T_{11}$, $T_{12}$ et des modules de vecteurs d'onde $k_{11}$ et $k_{12}$ sont sélectionnées telles que $k_{12} \times T_{12}{}^2 = (1/9) \times k_{11} \times T_{11}{}^2$. Ainsi, la fonction $P_{12}(a)$ possède une période qui est neuf fois plus grande que celle de la fonction $P_{11}(a)$. Pour les besoins d'illustration de la figure 4, les valeurs suivantes ont été adoptées pour les nombres constants : $P_0 = P_0' = 0,5$ et $C = C' = 1,0$. Dans le diagramme de la figure 4, l'axe horizontal repère les valeurs du paramètre externe a en unité arbitraire, et l'axe vertical, noté génériquement P, repère les valeurs des résultats de mesure $P_{11}$ et $P_{12}$. Les deux courbes $P_{11}(a)$ et $P_{12}(a)$ correspondent aux formules qui ont été données plus haut. Si l'intervalle dans lequel la valeur de a est recherchée, appelé intervalle d'exploration et issu par exemple d'une connaissance préalable, est plus petit que le quart de la période de la fonction $P_{12}(a)$, alors le résultat de mesure $P_{12}$ permet de supprimer l'indétermination qui affecte le calcul de a à partir du seul résultat $P_{11}$. Par exemple, les valeurs qui ont été obtenues pour les deux résultats de mesure $P_{11}$ et $P_{12}$ d'une même session de mesures sont celles notées $P_{11mes}$ et $P_{12mes}$. La valeur du paramètre externe a qui est déduite de cette session de mesures est donc la valeur unique d'abscisse dans le diagramme de la figure 4, qui résout simultanément les deux équations $P_{11}(a) = P_{11mes}$ et $P_{12}(a) = P_{12mes}$. Cette valeur est pointée par une flèche dans le diagramme, parmi toutes les valeurs de a qui satisfont isolément l'équation $P_{11}(a) = P_{11mes}$. Toutes ces valeurs sont notées $a_{n-2}$, $a_{n-1}{}^*$, $a_{n-1}$, $a_n{}^*$... conformément aux formules concernées qui ont été données dans la partie générale de la présente description.

La précision dans la détermination de la valeur du paramètre externe a est supérieure pour la mesure qui est effectuée avec l'ensemble d'atomes 11, par rapport à la précision qui est procurée par la mesure effectuée avec l'ensemble d'atomes 12. Dans le diagramme de la figure 4, ceci résulte du fait qu'en dehors de zones restreintes autour des maxima et des minima de la courbe de la fonction $P_{11}(a)$, cette courbe $P_{11}(a)$ présente une pente qui est supérieure à celle de l'autre courbe $P_{12}(a)$, en valeurs absolues.

Dans la pratique, il est possible que les reports des deux valeurs de résultats $P_{11mes}$ et $P_{12mes}$ qui ont été obtenues pour une même session de mesures ne correspondent pas exactement à une valeur unique commune pour le paramètre externe a. Dans ce cas, la valeur à sélectionner pour le paramètre externe a est celle parmi toutes les valeurs qui satisfont $P_{11}(a) = P_{11mes}$, qui est la plus proche de la valeur unique de a qui satisfait $P_{12}(a) = P_{12mes}$. Autrement dit, la mesure qui est réalisée avec l'ensemble d'atomes 12 a pour fonction de supprimer l'indétermination qui résulte de la mesure effectuée avec l'ensemble d'atomes 11, mais cette dernière mesure, réalisée à partir de l'ensemble d'atomes 11, procure la meilleure précision pour la valeur de a qui est déterminée finalement.

L'analyse des résultats de mesure $P_{11}$ et $P_{12}$ qui vient d'être décrite pour parvenir à la valeur unique du paramètre externe a (étape 4 sur la figure 2), peut être exécutée par une unité d'analyse (non représentée) mettant en

**EP 3 259 761 B1**

oeuvre un programme dédié.

Par exemple, le temps de base $T_{11}$ peut être égal à 150 ms (milliseconde), et le temps de base $T_{12}$ peut être égal à 50 ms. Dans ce cas, les modules des vecteurs d'onde $k_{11}$ et $k_{12}$ peuvent être égaux.

Par ailleurs, plusieurs méthodes sont connues pour ajuster les modules des vecteurs d'onde $k_{11}$ et $k_{12}$ à des valeurs différentes. La plupart de ces méthodes mettent en oeuvre les deux faisceaux laser $F_1$ et $F_2$ qui se propagent en sens inverses parallèlement à une direction commune (voir figure 1). Chaque interaction entre le rayonnement des deux faisceaux laser et un atome de l'un des ensembles 11/12 est multi-photonique, et le module de vecteur d'onde $k_{11/12}$ qui intervient dans les formules citées plus haut correspond à l'impulsion («momentum» en anglais) totale $p_{tot}$ qui est transférée à l'atome lors d'une telle interaction multi-photonique: $k_{11/12} = 2\Pi\, p_{tot}/h = N_{11/12} \times k_{laser} = N_{11/12} \times 2\Pi/\lambda_{laser}$, où h est la constante de Planck, $k_{laser}$ et $\lambda_{laser}$ sont respectivement le module du vecteur d'onde et la longueur d'onde du rayonnement laser qui constitue les faisceaux $F_1$ et $F_2$ ($k_{laser} = 2\Pi/\lambda_{laser}$), et $N_{11}$ et $N_{12}$ désignent les nombres de photons qui interviennent dans chaque interaction multi-photonique, respectivement pour un atome de l'ensemble 11 ou pour un atome de l'ensemble 12. Les deux nombres $N_{11}$ et $N_{12}$ peuvent être sélectionnés indépendamment l'un de l'autre, par les conditions de formation de l'interférence atomique pour l'ensemble d'atomes concerné. Ainsi, ces conditions déterminent les types des interactions multi-photoniques qui sont provoquées et le nombre $N_{11/12}$ des photons qui sont impliqués dans chaque interaction. Par exemple, chaque interaction multi-photonique peut être une diffraction des atomes par des réseaux optiques qui sont formés avec les faisceaux $F_1$ et $F_2$, en régime de Bragg ou bien en régime d'oscillations de Bloch avec transitions atomiques sans changement d'état interne pour les atomes. L'article intitulé «102hk Large Area Atom Interferometers» de S-w. Chio, T. Kovachy, H-C. Chien et M.A. Kasevitch, Phys. Rev. Lett. 107, 130403 (2011), décrit de mettre en oeuvre des interactions de Bragg multi-photoniques en produisant chaque impulsion («pulse» en anglais) de rayonnement de la séquence qui forme l'interférence atomique, sous forme d'une série de sous-impulsions élémentaires. Alternativement, chaque interaction multi-photonique peut être une transition Raman, ou une double diffraction par un réseau optique, c'est-à-dire des transitions atomiques qui sont accompagnées de changements de l'état interne de l'atome.

Il est entendu que l'invention peut être modifiée ou adaptée par rapport à la description détaillée qui vient d'en être donnée. En particulier, la séquence des impulsions qui forme chaque interférence atomique n'est pas nécessairement du type Mach-Zehnder, mais peut être remplacée par l'une des autres séquences connues de l'Homme du métier pour former une interférence atomique.

Enfin, le type de chaque interaction entre atomes et photons qui est provoquée dans chaque séquence, peut être varié dans la mesure où la combinaison des interactions de la séquence forme encore une interférence atomique, et où les vecteurs d'onde associés aux impulsions totales qui sont transférées aux atomes lors de ces interactions satisfont la présente invention.

## Revendications

1. Procédé de mesure par interférométrie atomique, dans lequel chaque session de mesures est exécutée avec au moins deux ensembles d'atomes (11, 12) chacun soumis à des conditions de formation d'une interférence atomique, les atomes de chaque ensemble d'atomes (11, 12) étant d'une espèce dédiée audit ensemble d'atomes et différente de l'espèce des atomes de chaque autre ensemble d'atomes,

   procédé dans lequel pour chaque session de mesures, lesdites conditions sont produites pour chaque ensemble d'atomes (11, 12) dans tout un volume qui est associé audit ensemble d'atomes et qui contient au moins un point commun avec le volume associé à chaque autre ensemble d'atomes, et sont produites entre un instant de début et un instant de fin respectivement avant et après un instant intermédiaire qui est commun pour tous les ensembles d'atomes,

   et dans lequel un résultat de mesure ($P_{11}$, $P_{12}$) est obtenu à chaque session de mesures indépendamment pour chaque ensemble d'atomes (11, 12), chaque résultat de mesure variant selon une première fonction d'un déphasage apparu pour l'ensemble d'atomes lors de la formation de l'interférence atomique, et ledit déphasage étant lui-même une seconde fonction d'un paramètre externe (a) dont une valeur est recherchée,

   ladite première fonction étant alternativement croissante et décroissante pour au moins un premier (11) des ensembles d'atomes de sorte qu'un résultat de mesure ($P_{11}$) qui est obtenu pour ledit premier ensemble d'atomes corresponde à plusieurs valeurs possibles du paramètre externe (a) à l'intérieur d'un intervalle d'exploration non nul, et

   ladite seconde fonction ayant, au moins pour un autre (12) des ensembles d'atomes différent dudit premier ensemble d'atomes (11), une dérivée par rapport à la valeur du paramètre externe (a), qui dépend d'au moins un facteur sélectionné parmi un temps de base (T) pour une séquence d'interactions entre les atomes et des photons, et un nombre de photons impliqués dans une interaction multi-photonique, ladite séquence d'interactions ou ladite interaction multi-photonique étant mise en oeuvre pour former l'interférence atomique dudit autre ensemble d'atomes,

**8**

le procédé étant **caractérisé en ce qu'**une valeur du facteur est sélectionnée pour réaliser une session de mesures, de sorte que le résultat de mesure ($P_{12}$) qui est obtenu pour ledit autre ensemble d'atomes (12) corresponde à une valeur unique du paramètre externe (a) à l'intérieur de l'intervalle d'exploration, si bien qu'une indétermination entre plusieurs valeurs du paramètre externe (a) qui existe à partir du résultat de mesure ($P_{11}$) obtenu pour le premier ensemble d'atomes (11), est supprimée par corrélation avec le résultat de mesure ($P_{12}$) obtenu pour ledit autre ensemble d'atomes (12).

2. Procédé selon la revendication 1, suivant lequel la première fonction a pour expression $P = P_0 \cdot [1 - C \times \cos(\Delta\Phi(a))]$ au moins pour le premier ensemble d'atomes (11), où P désigne le résultat de mesure, a désigne le paramètre externe, $\Delta\Phi(a)$ est le déphasage et $P_0$ et C sont deux nombres non nuls.

3. Procédé selon la revendication 1 ou 2, suivant lequel la seconde fonction est du type fonction affine au moins pour ledit autre ensemble d'atomes (12).

4. Procédé selon la revendication 3, suivant lequel un coefficient directeur de la fonction affine est égal à k x $T^2$, où T est le temps de base pour la séquence d'interactions entre les atomes et les photons, et k est un module d'une impulsion reçue ou cédée par un des atomes lors de chaque interaction entre les atomes et les photons, divisé par h/2$\Pi$ où h est la constante de Planck.

5. Procédé selon l'une quelconque des revendications précédentes, suivant lequel une dérivée du résultat de mesure ($P_{11}$) obtenu lors d'une session de mesures pour le premier ensemble d'atomes (11), par rapport à la valeur du paramètre externe (a), est supérieure à la dérivée du résultat de mesure ($P_{12}$) obtenu lors de la même session de mesures pour ledit autre ensemble d'atomes (12), aussi par rapport à la valeur du paramètre externe, en valeurs absolues.

6. Procédé selon l'une quelconque des revendications précédentes, suivant lequel deux des espèces d'atomes dédiées respectivement à deux des ensembles d'atomes (11, 12) utilisés dans une même session de mesures, sont les isotopes 85 et 87 du rubidium, ou des isotopes respectifs du rubidium et du césium, ou des isotopes respectifs du rubidium et du potassium.

7. Procédé selon l'une quelconque des revendications précédentes, suivant lequel le paramètre externe (a) est une coordonnée d'un champ gravitationnel ou une coordonnée d'une accélération subie par les atomes.

8. Appareil de mesure par interférométrie atomique comprenant :

   - une source d'atomes (100) adaptée pour produire au moins deux ensembles d'atomes (11, 12), avec les atomes de chaque ensemble d'atomes qui sont d'une espèce dédiée audit ensemble d'atomes et différente de l'espèce des atomes de chaque autre ensemble d'atomes ;
   - des moyens (101-103) adaptés pour produire des conditions d'interférence atomique pour chaque ensemble d'atomes (11, 12), de sorte que lesdites conditions soient produites pour chaque ensemble d'atomes dans tout un volume qui est associé audit ensemble d'atomes et qui contient au moins un point commun avec le volume associé à chaque autre ensemble d'atomes, et produites entre un instant de début et un instant de fin respectivement avant et après un instant intermédiaire qui est commun pour tous les ensembles d'atomes, de façon à constituer une session de mesures ;
   - un dispositif de détection agencé pour fournir des résultats de mesure ($P_{11}$, $P_{12}$) respectivement et indépendamment pour tous les ensembles d'atomes (11, 12) de chaque session de mesures ; et
   - une unité d'analyse adaptée pour calculer au moins une valeur d'un paramètre externe (a) à partir de chaque résultat ($P_{11}$, $P_{12}$) de mesure,

   dans lequel chaque résultat de mesure ($P_{11}$, $P_{12}$) varie selon une première fonction d'un déphasage apparu pour l'ensemble d'atomes (11, 12) correspondant lors de la formation de l'interférence atomique, et ledit déphasage est lui-même une seconde fonction du paramètre externe (a),
   ladite première fonction étant alternativement croissante et décroissante pour au moins un premier (11) des ensembles d'atomes de sorte qu'un même résultat de mesure ($P_{11}$) qui est obtenu pour ledit premier ensemble d'atomes correspond à plusieurs valeurs possibles du paramètre externe (a) à l'intérieur d'un intervalle d'exploration non nul, et
   ladite seconde fonction ayant, au moins pour un autre (12) des ensembles d'atomes différent dudit premier ensemble d'atomes (11), une dérivée par rapport à la valeur du paramètre externe (a), qui dépend d'au moins un facteur sélectionné parmi un temps de base (T) pour une séquence d'interactions entre les atomes et des photons, et un nombre de photons impliqués dans une interaction multi-photonique, ladite séquence d'interactions ou ladite interaction multi-photonique étant mise en oeuvre pour former l'interférence atomique dudit autre ensemble d'atomes, l'appareil étant **caractérisé en ce qu'**il est adapté pour fixer une valeur du facteur de sorte que, pour une même session de mesures, le résultat de mesure ($P_{12}$) qui est obtenu pour ledit autre ensemble d'atomes (12) corresponde à une valeur unique du paramètre externe (a) à l'intérieur de l'intervalle d'exploration.

9. Appareil selon la revendication 8, adapté en outre pour mettre en oeuvre un procédé selon l'une quelconque des revendications 2 à 7.

10. Appareil selon la revendication 8 ou 9, dans lequel pour chaque session de mesures, les conditions d'interférences atomiques sont produites pour tous les ensembles d'atomes (11, 12) en utilisant un ensemble de source laser (102, 103) unique, commun auxdits ensembles d'atomes.

11. Appareil selon l'une quelconque des revendications 8 à 10, formant un accéléromètre, un gravimètre ou un gyromètre.

**Patentansprüche**

1. Messverfahren durch Atominterferometrie, wobei jede Messreihe mit zumindest zwei Atomgruppen (11, 12), die jeweils Bedingungen zur Ausbildung einer Atominterferenz ausgesetzt werden, ausgeführt wird,
wobei die Atome jeder Atomgruppe (11, 12) von einer Art sind, die der Atomgruppe gewidmet ist und sich von der Art der Atome jeder anderen Atomgruppe unterscheidet,
wobei in dem Verfahren bei jeder Messreihe die Bedingungen für jede Atomgruppe (11, 12) in einem ganzen Volumen, das der Atomgruppe zugeordnet ist und zumindest einen gemeinsamen Punkt mit dem jeder anderen Atomgruppe zugeordneten Volumen beinhaltet, erzeugt werden und zwischen einem Startzeitpunkt und einem Endzeitpunkt vor bzw. nach einem Zwischenzeitpunkt, der allen Atomgruppen gemeinsam ist, erzeugt werden,
und wobei bei jeder Messreihe unabhängig für jede Atomgruppe (11, 12) ein Messergebnis ($P_{11}$, $P_{12}$) erhalten wird,
wobei jedes Messergebnis in Abhängigkeit von einer ersten Funktion einer für die Atomgruppe bei der Ausbildung der Atominterferenz aufgetretenen Phasenverschiebung variiert und wobei die Phasenverschiebung ihrerseits eine zweite Funktion eines externen Parameters (a) ist, von dem ein Wert gesucht wird,
wobei die erste Funktion für zumindest eine erste (11) der Atomgruppen alternierend zunehmend und abnehmend ist, sodass ein für die erste Atomgruppe erhaltenes Messergebnis ($P_{11}$) mehreren möglichen Werten des externen Parameters (a) innerhalb eines Untersuchungsintervalls ungleich null entspricht, und
wobei die zweite Funktion zumindest für eine andere (12) der Atomgruppen, die sich von der ersten Atomgruppe (11) unterscheidet, eine Ableitung in Bezug auf den Wert des externen Parameters (a) aufweist, die von zumindest einem Faktor, ausgewählt aus einer Basiszeit (T) für eine Sequenz von Interaktionen zwischen den Atomen und Photonen und einer Anzahl von an einer Mehrphotoneninteraktion beteiligten Photonen, abhängt, wobei die Sequenz von Interaktionen bzw. die Mehrphotoneninteraktion ausgeführt wird, um die Atominterferenz der anderen Atomgruppe auszubilden,
wobei das Verfahren **dadurch gekennzeichnet ist, dass** ein Wert des Faktors ausgewählt wird, um eine Messreihe durchzuführen, sodass das für die andere Atomgruppe (12) erhaltene Messergebnis ($P_{12}$) einem einzigartigen Wert des externen Parameters (a) innerhalb des Untersuchungsintervalls entspricht, sodass eine Unbestimmtheit zwischen mehreren Werten des externen Parameters (a), die basierend auf dem für die erste Atomgruppe (11) erhaltenen Messergebnis ($P_{11}$) besteht, durch Korrelation mit dem für die andere Atomgruppe (12) erhaltenen Messergebnis ($P_{12}$) beseitigt wird.

2. Verfahren nach Anspruch 1, wobei die erste Funktion zumindest für die erste Atomgruppe (11) den Ausdruck $P = P_0 \cdot [1 - C \times \cos(\Delta\Phi(a))]$ aufweist, wobei P das Messergebnis bezeichnet, a den externen Parameter bezeichnet, $\Delta\Phi(a)$ die Phasenverschiebung ist und $P_0$ und C zwei Zahlen ungleich null sind.

3. Verfahren nach Anspruch 1 oder 2, wobei die zweite Funktion zumindest für die andere Atomgruppe (12) vom Typ einer affinen Funktion ist.

4. Verfahren nach Anspruch 3, wobei ein Gewichtungsfaktor der affinen Funktion gleich $k \times T^2$ ist; wobei T die Basiszeit für die Sequenz von Interaktionen zwischen den Atomen und den Photonen ist und k ein Modul eines durch eines der Atome bei jeder Interaktion zwischen den Atomen und den Photonen empfangenen oder abgegebenen Impulses, geteilt durch $h/2\pi$, ist, wobei h die Planck-Konstante ist.

**5.** Verfahren nach einem der vorangehenden Ansprüche, wobei eine Ableitung des bei einer Messreihe für die erste Atomgruppe (11) in Bezug auf den Wert des externen Parameters (a) erhaltenen Messergebnisses ($P_{11}$) größer ist als die Ableitung des bei derselben Messreihe für die andere Atomgruppe (12) ebenfalls in Bezug auf den Wert des externen Parameters erhaltenen Messergebnisses ($P_{12}$), in Absolutwerten.

**6.** Verfahren nach einem der vorangehenden Ansprüche, wobei zwei der Atomarten, die jeweils zweien der in einer selben Messreihe verwendeten Atomgruppen (11, 12) gewidmet sind, die Rubidiumisotope 85 und 87 oder jeweils Rubidium- bzw. Cäsiumisotope oder jeweils Rubidium-bzw. Kaliumisotope sind.

**7.** Verfahren nach einem der vorangehenden Ansprüche, wobei der externe Parameter (a) eine Koordinate eines Gravitationsfelds oder eine Koordinate einer von den Atomen erfahrenen Beschleunigung ist.

**8.** Gerät zur Messung durch Atominterferometrie, umfassend:

- eine Atomquelle (100), die dazu angepasst ist, zumindest zwei Atomgruppen (11, 12) zu erzeugen, wobei die Atome jeder Atomgruppe von einer Art sind, die der Atomgruppe gewidmet ist und sich von der Art der Atome jeder anderen Atomgruppe unterscheidet;
- Mittel (101 -103), die dazu angepasst sind, für jede Atomgruppe (11, 12) Atominterferenzbedingungen zu erzeugen, sodass die Bedingungen für jede Atomgruppe in einem ganzen Volumen, das der Atomgruppe zugeordnet ist und zumindest einen gemeinsamen Punkt mit dem jeder anderen Atomgruppe zugeordneten Volumen beinhaltet, erzeugt werden und zwischen einem Startzeitpunkt und einem Endzeitpunkt vor bzw. nach einem Zwischenzeitpunkt, der allen Atomgruppen gleich ist, erzeugt werden, um eine Messreihe zu bilden;
- eine Detektionsvorrichtung, die eingerichtet ist, um Messergebnisse ($P_{11}$, $P_{12}$) jeweils unabhängig für alle Atomgruppen (11, 12) jeder Messreihe bereitzustellen und
- eine Analyseeinheit, die dazu angepasst ist, zumindest einen Wert eines externen Parameters (a) anhand jedes Messergebnisses ($P_{11}$, $P_{12}$) zu berechnen, wobei jedes Messergebnis ($P_{11}$, $P_{12}$) in Abhängigkeit von einer ersten Funktion einer für die Atomgruppe (11, 12) aufgetretenen Phasenverschiebung, die der Ausbildung der Atominterferenz entspricht, variiert und wobei die Phasenverschiebung ihrerseits eine zweite Funktion des externen Parameters (a) ist,

wobei die erste Funktion für zumindest eine erste (11) der Atomgruppen alternierend zunehmend und abnehmend ist, sodass ein selbes, für die erste Atomgruppe erhaltenes Messergebnis ($P_{11}$) mehreren möglichen Werten des externen Parameters (a) innerhalb eines Untersuchungsintervalls ungleich null entspricht, und

wobei die zweite Funktion zumindest für eine andere (12) der Atomgruppen, die sich von der ersten Atomgruppe (11) unterscheidet, eine Ableitung in Bezug auf den Wert des externen Parameters (a) aufweist, die von zumindest einem Faktor, ausgewählt aus einer Basiszeit (T) für eine Sequenz von Interaktionen zwischen den Atomen und Photonen und einer Anzahl von an einer Mehrphotoneninteraktion beteiligten Photonen, abhängt, wobei die Sequenz von Interaktionen bzw. die Mehrphotoneninteraktion ausgeführt wird, um die Atominterferenz der anderen Atomgruppe auszubilden,

wobei das Gerät **dadurch gekennzeichnet ist, dass** es dazu angepasst ist, einen Wert des Faktors so festzulegen, dass bei einer selben Messreihe das für die andere Atomgruppe (12) erhaltene Messergebnis ($P_{12}$) einem einzigartigen Wert des externen Parameters (a) innerhalb des Untersuchungsintervalls entspricht.

**9.** Gerät nach Anspruch 8, das ferner dazu angepasst ist, ein Verfahren nach einem der Ansprüche 2 bis 7 auszuführen.

**10.** Gerät nach Anspruch 8 oder 9, wobei bei jeder Messreihe die Atominterferenzbedingungen für alle Atomgruppen (11, 12) unter Verwendung einer allen Atomgruppen gemeinsamen einzigen Laserquelleneinheit (102, 103) erzeugt werden.

**11.** Gerät nach einem der Ansprüche 8 bis 10, ausbildend einen Accelerometer, einen Gravimeter oder einen Gyrometer.

**Claims**

**1.** Method of measurement by atomic interferometry, in which each session of measurements is executed with at least two sets of atoms (11, 12) each subjected to conditions of formation of an atomic interference, the atoms of each set of atoms (11, 12) being of a species dedicated to said set of atoms and different from the species of atoms of each other set of atoms,

method in which, for each session of measurements, said conditions are produced for each set of atoms (11, 12) throughout a volume that is associated with said set of atoms and that contains at least one point in common with the volume associated with each other set of atoms, and are produced between a start time point and an end time point respectively before and after an intermediate time point that is common to all the sets of atoms,

and in which a measurement result ($P_{11}$, $P_{12}$) is obtained in each session of measurements independently for each set of atoms (11, 12), each measurement result varying according to a first function of a phase shift that appeared for the set of atoms during the formation of the atomic interference, and said phase shift itself being a second function of an external parameter (a) a value of which is sought,

said first function being alternately increasing and decreasing for at least a first (11) of the sets of atoms so that a measurement result ($P_{11}$) that is obtained for said first set of atoms corresponds to several possible values of the external parameter (a) within a non-zero exploration interval, and

said second function having, for at least one other (12) of the sets of atoms different from said first set of atoms (11), a derivative with respect to the value of the external parameter (a), that depends on at least one factor selected from a base time (T) for a sequence of interactions between the atoms and photons, and a number of photons involved in a multiphoton interaction, said sequence of interactions or said multiphoton interaction being implemented in order to form the atomic interference of said other set of atoms,

the method being **characterized in that** a value of the factor is selected in order to carry out a session of measurements, so that the measurement result ($P_{12}$) that is obtained for said other set of atoms (12) corresponds to a single value of the external parameter (a) within the exploration interval, so that an indetermination between several values of the external parameter (a) that exists from the measurement result ($P_{11}$) obtained for the first set of atoms (11), is eliminated by correlation with the measurement result ($P_{12}$) obtained for said other set of atoms (12).

2. Method according to claim 1, wherein the first function has the expression $P = P_0 \cdot [1 - C \times \cos(\Delta\Phi(a))]$ at least for the first set of atoms (11), where P denotes the measurement result, a denotes the external parameter, $\Delta\Phi(a)$ is the phase shift and $P_0$ and C are two non-zero numbers.

3. Method according to claim 1 or 2, wherein the second function is of affine function type at least for said other set of atoms (12).

4. Method according to claim 3, wherein a slope coefficient of the affine function is equal to $k \times T^2$, where T is the base time for the sequence of interactions between the atoms and the photons, and k is a modulus of a momentum received or transferred by one of the atoms during each interaction between the atoms and the photons, divided by $h/(2\Pi)$, where h is Planck's constant.

5. Method according to any one of the preceding claims, wherein a derivative of the measurement result ($P_{11}$) obtained during a session of measurements for the first set of atoms (11), with respect to the value of the external parameter (a), is greater than the derivative of the measurement result ($P_{12}$) obtained during the same session of measurements for said other set of atoms (12), also with respect to the value of the external parameter, in absolute values.

6. Method according to any one of the preceding claims, wherein two of the species of atoms, which are dedicated respectively to two of the sets of atoms (11, 12) used in one and same session of measurements, are the rubidium isotopes 85 and 87, or respective isotopes of rubidium and caesium, or respective isotopes of rubidium and potassium.

7. Method according to any one of the preceding claims, wherein the external parameter (a) is a gravitational field coordinate or a coordinate of an acceleration that atoms are subjected to.

8. Apparatus for measurement by atomic interferometry comprising:

- a source of atoms (100) suitable for producing at least two sets of atoms (11, 12), with the atoms of each set of atoms that are of a species dedicated to said set of atoms and different from the species of atoms of each other set of atoms;
- means (101-103) suitable for producing conditions of atomic interference for each set of atoms (11, 12), in such a way that said conditions are produced for each set of atoms throughout a volume that is associated with said set of atoms and that contains at least one point in common with the volume associated with each other set of atoms, and are produced between a start time point and an end time point respectively before and after an intermediate time point that is common to all the sets of atoms, so as to constitute a session of measurements;
- a detection device, which is arranged to provide measurement results ($P_{11}$, $P_{12}$) respectively and independently for all the sets of atoms (11, 12) of each session of measurements; and

- an analysis unit, which is suitable for calculating at least one value of an external parameter (a) from each measurement result ($P_{11}$, $P_{12}$),

in which each measurement result ($P_{11}$, $P_{12}$) varies according to a first function of a phase shift that appeared for the corresponding set of atoms (11, 12) during formation of the atomic interference, and said phase shift is itself a second function of the external parameter (a),

said first function being alternately increasing and decreasing for at least a first (11) of the sets of atoms so that one and same measurement result ($P_{11}$) that is obtained for said first set of atoms corresponds to several possible values of the external parameter (a) within a non-zero exploration interval, and

said second function having, at least for one other (12) of the sets of atoms different from said first set of atoms (11), a derivative with respect to the value of the external parameter (a), that depends on at least one factor selected from a base time (T) for a sequence of interactions between the atoms and photons, and a number of photons involved in a multiphoton interaction, said sequence of interactions or said multiphoton interaction being implemented in order to form the atomic interference of said other set of atoms,

the apparatus being **characterized in that** it is suitable for fixing a value of the factor so that, for one and same session of measurements, the measurement result ($P_{12}$) that is obtained for said other set of atoms (12) corresponds to a single value of the external parameter (a) within the exploration interval.

9. Apparatus according to claim 8, suitable moreover for implementing a method according to any one of claims 2 to 7.

10. Apparatus according to claim 8 or 9, in which for each session of measurements, the conditions of atomic interferences are produced for all the sets of atoms (11, 12) using a single laser source assembly (102, 103), that is common to said sets of atoms.

11. Apparatus according to any one of claims 8 to 10, forming an accelerometer, a gravimeter or a gyrometer.

## FIG. 1

PRODUCTION DES ATOMES FROIDS /1

ENSEMBLE D'ATOMES 11       ENSEMBLE D'ATOMES 12

INTERFÉROMÉTRIE $2_1$       INTERFÉROMÉTRIE $2_2$

DÉTECTION $3_1$       DÉTECTION $3_2$

RÉSULTAT DE MESURE : $P_{11}$       RÉSULTAT DE MESURE : $P_{12}$

VALEUR UNIQUE POUR LE PARAMÈTRE EXTERNE a /4

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE A. BONNIN ; N. ZAHZAM ; Y. BIDEL ; A. BRESSON.** Simultaneous Dual-Species Matter-Wave Accelerometer. *Phys. Rev. A,* 2013, vol. 88, 043615
- **F. SORRENTINO et al.** Simultaneous measurement of gravity accélération and gravity gradient with an atom interferometer. *Appl. Phys. Lett.,* 2012, vol. 101, 114106
- **M. KASEVITCH et al.** Atomic interferometry using stimulated Raman transitions. *Phys. Rev. Lett.,* 1991, vol. 67, 181-184
- **DE Q. BODART et al.** A cold atom pyramidal gravimeter with a single laser beam. *Appl. Phys. Lett.,* 2010, vol. 96, 134101
- **DE S-W. CHIO ; T. KOVACHY ; H-C. CHIEN ; M.A. KASEVITCH.** 102hk Large Area Atom Interferometers. *Phys. Rev. Lett.,* 2011, vol. 107, 130403